Europäisches Patentamt

**European Patent Office**

Office européen des brevets

(11) Publication number: **0 064 368**
**A2**

# (12) EUROPEAN PATENT APPLICATION

(21) Application number: **82302096.1**

(22) Date of filing: **23.04.82**

(51) Int. Cl.³: **B 62 B 7/06**
**B 62 B 9/08**

(30) Priority: **27.04.81 GB 8112878**
**10.06.81 GB 8117759**
**17.08.81 GB 8125073**

(43) Date of publication of application:
**10.11.82 Bulletin 82/45**

(84) Designated Contracting States:
**AT BE CH DE FR GB IT LI LU NL SE**

(71) Applicant: **KIRK-DYSON DESIGNS LIMITED**
**Leafield Estate**
**Corsham Wiltshire SN13 9UD(GB)**

(72) Inventor: **Poole, Richard John**
**Leafield Estate**
**Corsham Wiltshire SN13 9UD(GB)**

(74) Representative: **Daley, Michael John et al,**
**F.J. CLEVELAND & COMPANY 40/43 Chancery Lane**
**London, WC2A 1JQ(GB)**

(54) **Folding pushchair and brake.**

(57) An infant's pushchair has wide wheels (5) with sockets (9) in the inner surfaces. Braking rods (13) inserted into the sockets at the rear axle (4) to prevent movement of the pushchair. A folding chassis 1 supports front and rear axles 3 and 4.

FIG.3

EP 0 064 368 A2

- 1 -

## DESCRIPTION

This invention relates to a wheel for a hand propelled vehicle such as an infant pushchair, a braking arrangement incorporating the wheel and the vehicle with the braking arrangement.

A wheel in accordance with the present invention has a ground-engaging part which is usually of convex cross section and is characterised by at least one socket in a side surface, the socket having depth along the rolling axis of the wheel.

A braking part on the vehicle can be inserted into the socket to prevent rotation of the wheel.

In one embodiment of the invention the wheel is substantially spherical having a width approximately equal to its depth and the socket is formed in a curved surface of the wheel which is inwardly facing in use. In a second and presently preferred embodiment a wheel, though wide with a convex ground engaging part, has the inwardly facing surface in which the socket is formed generally plane and disposed in use upright substantially normally to the rolling axis of the wheel.

In both embodiments there will preferably be a plurality of sockets disposed in a circular array around the rolling axis of the wheel.

Further in accordance with the present invention there is provided a braking arrangement incorporating at least one wheel of the kind described above, such arrangement being characterised by an elongate rigid braking member and actuating means for moving the braking member longitudinally between a braking position inserted into the socket or one of the sockets and a retracted inoperative position. Usually there will be two such braking elements, one on either end of an axle of the vehicle and each engaging a respective socketted wheel. Each element may be carried on an arm pivotally connected to the axle about an axis at right angles to the rolling axis.

The wheel whether wholly or partially spherical or not is conveniently formed with the sockets in one-piece from an appropriate plastics material. A rotational moulding technique is preferred to produce a hollow wheel with a wall thickness appropriate to the desired strength and resilience of the wheel. The socket(s) thereby produced are blind bores.

The invention further provides a hand propelled vehicle specifically an infant pushchair incorporating the braking arrangement. The vehicle has a folding chassis wherein a member carrying the rear axle is pivotally connected about a horizontal axis, that is horizontal in use, to a seat support and a pushing handle, wherein a front axle carrier is pivotally connected to the handle and the seat support and wherein the front and rear axle carriers are moved towards one another to fold the chassis by downward pivoting movement of the handle behind the rear axle carrier. This form of folding chassis, in accordance with another aspect of the invention, may find application in vehicles other than those with the above described braking arrangements.

A particular embodiment of the invention will now be described with reference to the accompanying drawings wherein:-

Figure 1 is a side view of a pushchair in accordance with the particular embodiment;

Figures 2 and 3 are views along arrow A of Figure 1 of the rear axle and braking arrangement of the pushchair;

Figure 4 is an inside view of a pushchair wheel;

Figure 5 is a side view of the pushchair chassis;

Figures 6 and 7 are side views of the chassis illustrating folding;  and

Figure 8 is a section on the line VIII-VIII of Figure 5 having a safety locking device.

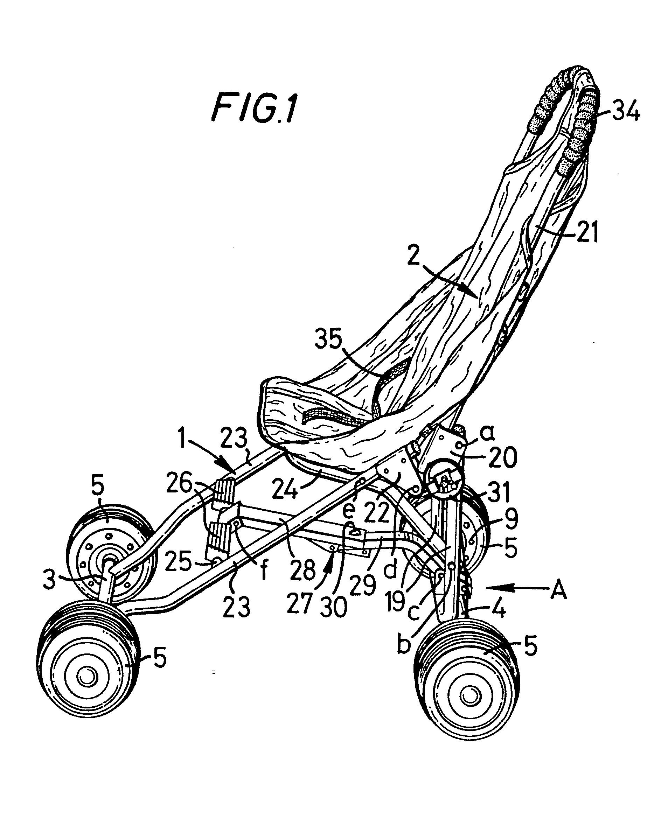

Referring to Figure 1 of the drawings the infant pushchair illustrated therein comprises a folding chassis frame 1 with a seat 2 and front and rear axles 3 and 4 each of which supports two rolling wheels 5 in accordance with the invention.

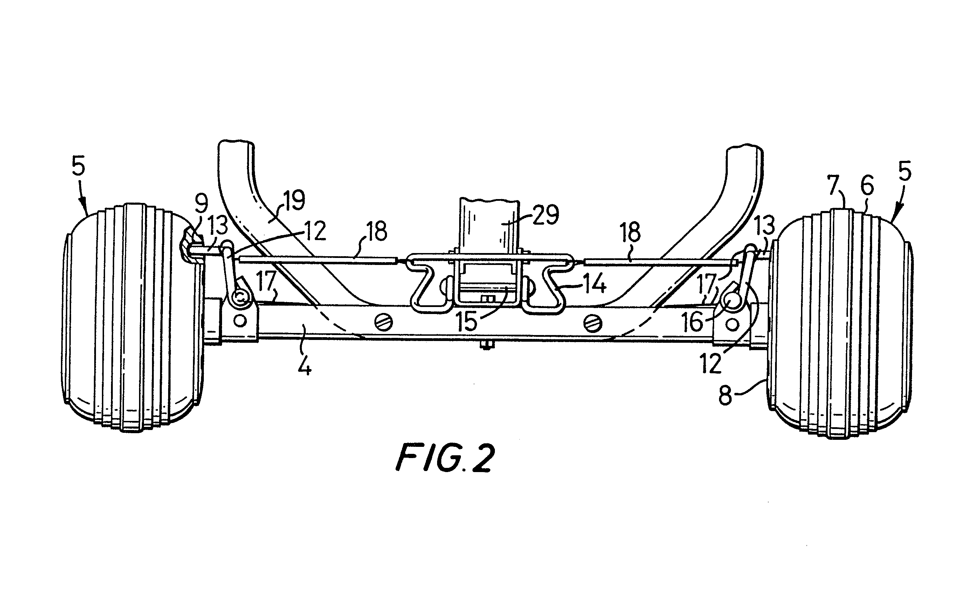

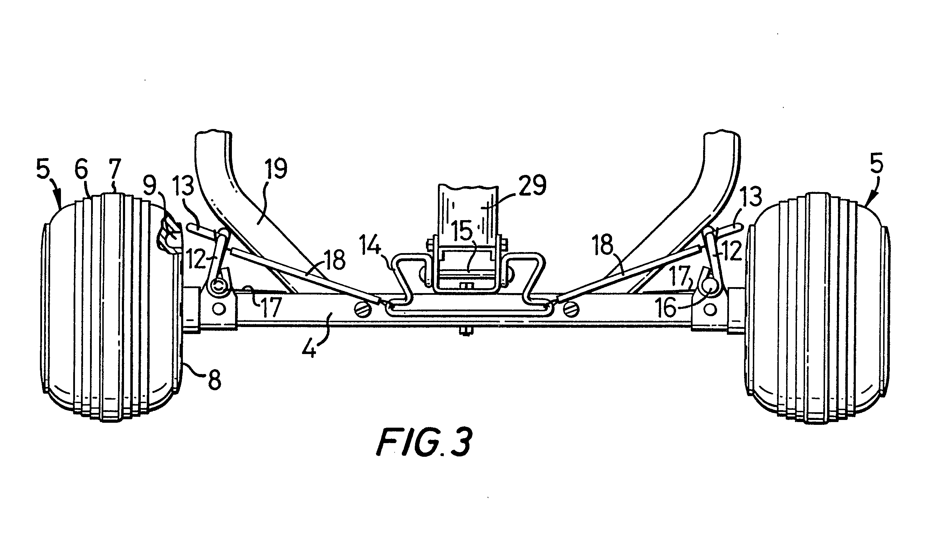

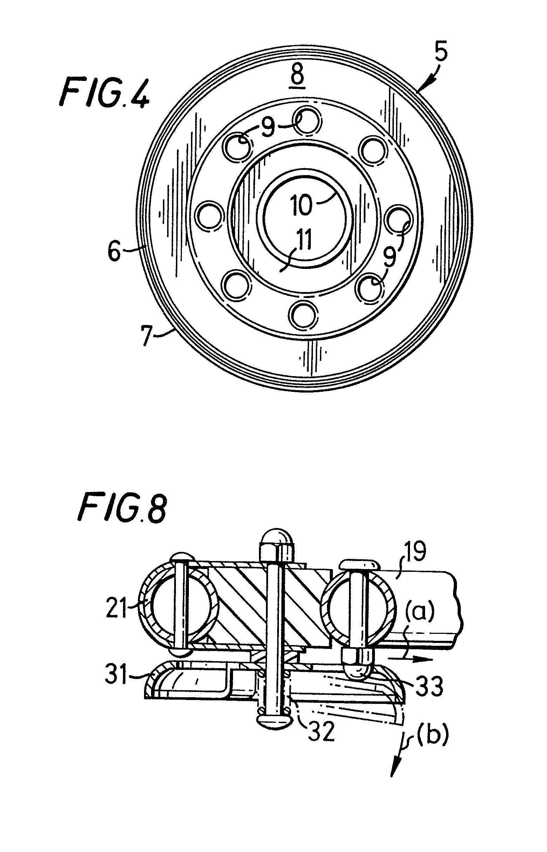

Each wheel 5 (see also Figures 2, 3 and 4) is of substantial width in comparison with the radius thus giving a large area supporting surface and hence a comfortable ride.  Typical dimensions are 17 cm maximum diameter and $9\frac{1}{2}$ cm wide.  Each wheel 5 comprises a slightly convex treaded ground-engaging part 6, with a central rib 7, acting as a tyre and generally plain side surfaces 8 which are upright in use.  As can best be seen from Figure 4 of the drawings the inner of each side surface 8 is formed with a plurality of sockets 9 disposed in a circular array about the rolling axis of the wheel.  The outer side is plain without the sockets.  Each socket 9 is a short cylindrical blind bore of the order of 1 cm in length. The wheel is moulded in a relatively hard thermoplastics material and has a central axial socket surrounded by an annular recess 11. A suitable hub with bearings on the axle and within each wheel allows the wheel to rotate on the respective axle. Referring now to Figures 2 and 3 an arm 12 carrying a laterally outwardly extending braking rod 13 is pivotally connected to a pin 16 fixed adjacent each end part of the axle 4. A coil spring 17 anchored to the axle 4 surrounds each pin 16 and biasses its arm 12 laterally outwardly to the braking condition. The pivotal connection between each arm 12 and the axle 4 is such that the arm 12 pivots about an axis at right angles to the rolling axis and extending frontwardly and rearwardly with regard to the vehicle so that the rod 13 carried thereby is moved into and retracted from one of the sockets 9 on the wheel. An actuating stirrup 14 is pivotally connected to an axis rod 15 parallel to the axle 4 and is joined by inextensible cables 18 to arms 12.

The braked position of the pushchair is illustrated in Figure 2 with the rods 13 inserted under spring bias into the adjacent socket 9 and rotation of the wheels and hence movement of the pushchair prevented. When the stirrup 14 is pivoted downwardly, conveniently by the user's foot and moved to a position under axle 14 cables 18 pull the arms 12 inwardly against the spring bias to retract the rods 13 from the sockets 9 as illustrated in Figure 3.

In the condition of Figure 3 the pushchair can be freely pushed. When the user lifts the stirrup to the condition shown in Figure 2 the spring bias is allowed to pivot the braking arms outwardly. As soon as the rods 13 find a socket 9 rolling rotation of the rear wheels 5 is stopped.

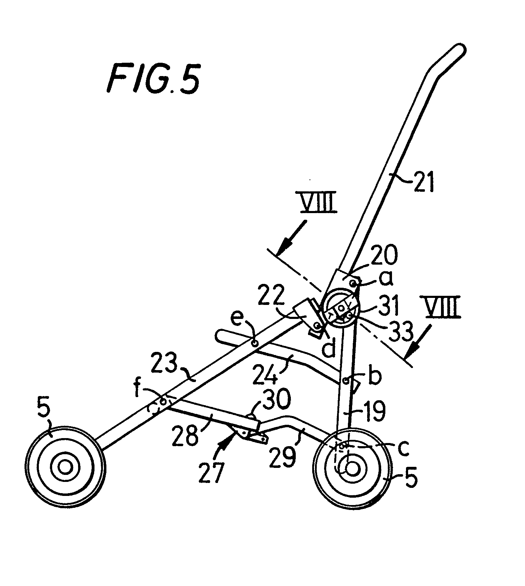

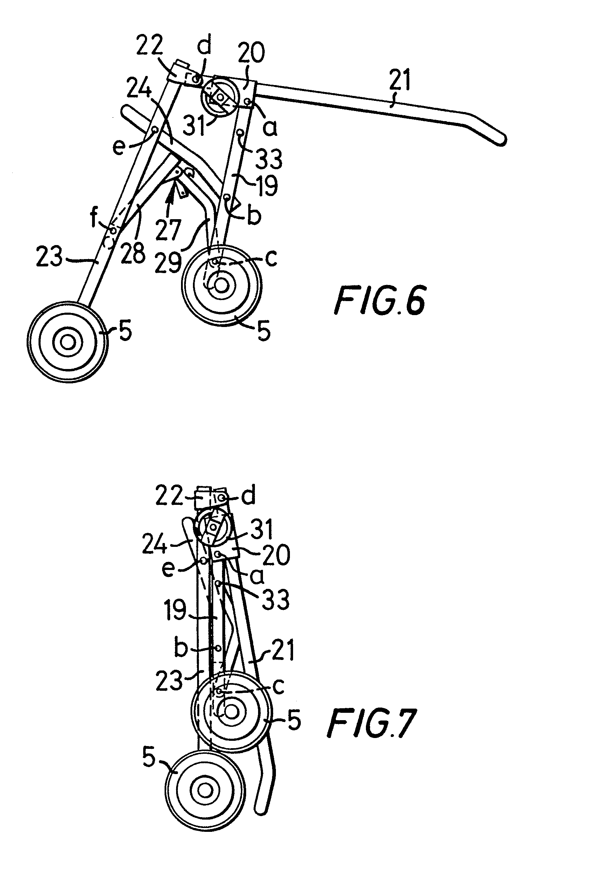

Turning now to the frame construction and to Figures 5, 6 and 7 of the drawings the chassis frame 1 illustrated comprises a U-shaped back axle supporting member 19 (see also Figures 2 and 3) upstanding in the open condition having rigidly fixed thereto the rear axle 4 carrying the wheels 5. Pivotally connected about a horizontal axis to the upstanding free end parts of the limbs of the U-shape 19 are brackets 20 fixed to each limb of a rearwardly extending, again U-shaped, handle member 21. The flanges of channel-shaped links 22 are pivotally connected about a horizontal axis to the front end parts of the limbs of handle member 21, the links 22 each being fixed to a frontwardly extending downwardly inclined limb 23 of a front axle carrier. The front axle 3 spans the front end parts of limbs 28.

From a position intermediate the height of the member 19 a looped seat support member 24 extends frontwardly the end parts of the support member 24 being pivotally connected to the member 19 about a horizontal axis. A cross member 25 between limbs 23 serves to support foot rest 26 and a collapsible toggle linkage 27 connects the cross member 25 to the rear axle 3. The linkage 27 comprises a front part 28 pivotally connected to cross member 25 and a rear part 29 pivotally connected to the first part 18 and to the rear axle 4 (see Figures 2 and 3). In the extended condition shown in Figure 1 the toggle linkage 27 is over the top dead centre and stable, and this stability is confirmed by a safety latch 30.

Thus considering the chassis as a whole the rear axle carrying member 19 assembly is pivotally connected about horizontal axes a, b and c respectively to the handle 21 the seat support 24 and the rear part 29 of toggle linkage 27. The front axle carrier 6 is respectively connected about horizontal pivot axes d, e and f to the front end of the handle 21, a forward position of the seat support 21 and the front end part 28 of the toggle linkage 27. During the folding operation of the frame from the open condition shown in Figure 5 through Figure 7 the toggle linkage 12 is first delatched and pivoted upwardly about its central connection and the handle pulled downwardly. The front axle carrier, i.e. limbs 23, is then moved rearwardly towards the rear axle carried 19 by the illustrated pivoting action about the pivots a to f finally to the closed condition illustrated in Figure 4. Erection of the chassis is the reverse of these movements.

An attitional safety device to prevent inadvertent folding is a rotatable dished ring 31 supported by one of the brackets 20 (see Figures 1

- 8 -

and 8). This ring 31 is normally inwardly biassed by spring 32 to the position illustrated wherein it abuts a stud 33 to prevent the movement in the direction of arrow (a) which is needed to fold the frame. Lifting against the spring bias along arrow (b) clears the obstruction to allow folding.

The undersurface of the substantially rigid base of seat 2 is detachably clipped to support 24 and the looped handle 21 with grip 34 is threaded through sockets in the seat. The essentially fabric seat is removable and has safety harness 35. The seat folds to be collapsed with the chassis.

CLAIMS

1. A braking arrangement for a hand-propelled vehicle comprising at least one wheel with a ground-engaging part and at least one socket in a side surface and an elongate rigid braking member and actuating means for moving the braking member longitudinally between a braking position inserted into the socket or one of the sockets and a retracted inoperative position.

2. A braking arrangement according to Claim 1 with two braking members positioned one on either end of a vehicle axis.

3. A braking arrangement according to either Claim 1 or Claim 2 wherein the braking members are spring biassed to the inserted position and the actuating means are operable against the bias to retract the braking members.

4. A hand propelled vehicle, particularly an infant pushchair comprising a chassis with front and rear axles carrying ground wheels, at least one of the axles incorporating a braking arrangement according to any of the preceding claims.

5. A vehicle according to Claim 4 having a foldable chassis wherein a member carrying the rear axle is pivotally connected about a horizontal axis, that is horizontal in use, to a seat support and a pushing handle, wherein a front axle carrier is pivotally connected to the handle and the seat support and wherein the front and rear axle carriers are moved towards one another to fold the chassis by downward pivoting movement of the handle behind the rear axle carrier.

6. A wheel for a braking arrangement as claimed in Claim 1 comprising a ground engaging part and at least one socket in the side surface the socket having depth along the rolling axis of the wheel.

7. A wheel as claimed in Claim 6 having a plurality of the sockets disposed in a circular array around the rolling axis of one wheel.

8. A wheel as claimed in either Claim 6 or Claim 7 of generally spherical form with curved or flat sides.

FIG.1

FIG.2

*FIG.3*

FIG.4

FIG.8

FIG.5

FIG.6

FIG.7